Europäisches Patentamt

European Patent Office

Office européen des brevets

(11) Publication number: 0 403 045 A2

# EUROPEAN PATENT APPLICATION

(21) Application number: 90300178.2

(51) Int. Cl.⁵: B60C 9/18, B60C 9/20

(22) Date of filing: 08.01.90

(30) Priority: 14.06.89 JP 151673/89

(43) Date of publication of application:
19.12.90 Bulletin 90/51

(84) Designated Contracting States:
FR GB LU

(71) Applicant: Bridgestone Corporation
10-1, Kyobashi 1-Chome Chuo-Ku
Tokyo 104(JP)

(72) Inventor: Yamada, Shigeki
554-18, Nihongi, Mizuho-machi,
Nishitama-gun
Tokyo(JP)

(74) Representative: Whalley, Kevin et al
MARKS & CLERK 57/60 Lincoln's Inn Fields
London WC2A 3LS(GB)

(54) Tire for aircraft.

(57) A plurality of belts or breakers (26) is provided on the outside of a carcass (12) in a tread of an aircraft pneumatic tire (10). A protective layer (30) is provided on the outside of the belts or the breakers, to protect the belts or breakers from intrusion of foreign matter from the tread surface. The protective layer has a plurality of cords (32) which are disposed in parallel relation to each other, preferably in a wavy configuration. Each of these cords comprises a plurality of bundled filaments (40) and is coated with a thin rubber layer (33). An impregnating agent (42) such as liquid rubber is impregnated between the filaments to fill any spaces between the filaments. Thus, even if cuts occur due to intrusion of foreign matter from the tread surface, it is possible to prevent the intrusion of water to the filaments.

FIG.1

EP 0 403 045 A2

# F I G. 3

## TIRE FOR AIRCRAFT

The present invention relates to a tire for an aircraft, which is used at landing and taking-off of the aircraft.

Conventionally, aircraft utilize a plurality of bias tires. Bias tires are convenient, because if consideration is made only to landing and taking-off of the aircraft, they are superior in durability in straight line running.

In connection with the above, since a plurality of tires are used on one aircraft, an improvement in wear resistance and an improvement in a number of retreading or recapping is required. For this reason, an increase of the tread-thickness dimension of the tire, and so on is considered. For lightening the weight of the aircraft, however, it is essential to lighten also the weight of the tire. Accordingly, merely increasing the tread-thickness dimension of the tire is not possible. Further, since a space, in which the tires of the aircraft are accommodated, is limited, an outer dimension of the tire cannot be increased. In this connection, a bias tire has been developed in which wear resistance is maintained and weight is reduced by 30%. However, such a bias tire cannot be retreaded or recapped. This causes an increase in running cost.

On the other hand, in order to maintain durability of the tire, it is required to restrict damage which occurs from tire cuts due to foreign matter during straight line running on a runway. Here, a protective layer is embedded in the tread section of the tire, to prevent the cuts from progressing from the outside. Generally, a plurality of corrugated aramid cords are applied to the protective layer. The plurality of corrugated aramid cords are formed into a plate configuration in which the aramid cords are arranged in side-by-side relation in a widthwise direction of the tire along a circumferential direction thereof.

Each of the aramid cords is formed from bundles of aramid fibers. The aramid fibers are bonded or adhered to each other by adhesive to form a single cord. Here, the aramid fibers are fixedly adhered to each other by heat treatment at temperatures of about 200° C to 260° C after coating with the adhesive.

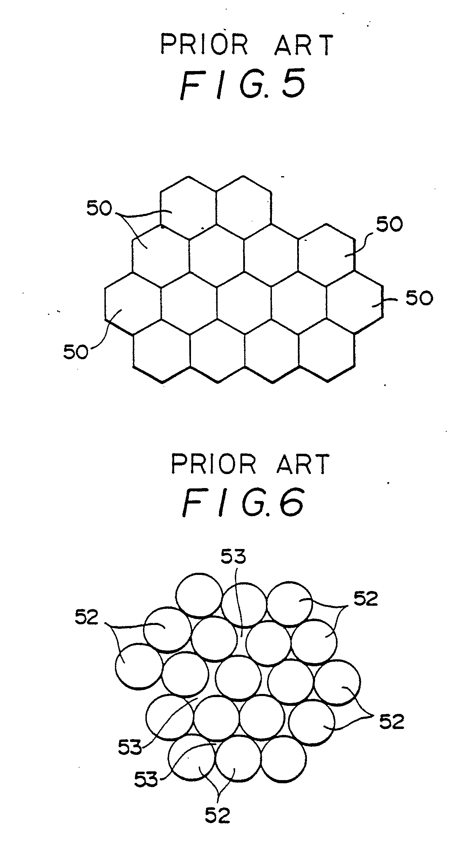

However, since each of the aramid fibers has an outer dimension which is extremely fine as compared with nylon fibers and polyester fibers, penetration of the adhesive coating from the outside is poor. Here, as shown in Fig. 5 of the attached drawings, if a cord is formed from a plurality of nylon fibers 50, the above-described heat treatment softens the nylon fibers 50 so that no gaps or clearances are formed between the nylon fibers 50. On the contrary, as shown in Fig. 6, a plurality of aramid fibers 52 are not softened by the above-mentioned heat treatment so that cavity portions 53 are formed between the aramid fibers 52. Under this condition, as cuts progress from the tread section to the protective layer, moisture can penetrate into the cavity portions 53 between the aramid fibers 52, from the cut portions,and moisture can be transferred in the circumferential direction of the tire.

The aramid fibers 52 have a nature such that, if the aramid fibers absorb moisture under high temperature, adhesiveness between the aramid fibers is deteriorated. Accordingly, there is a possibility of the protective layer being peeled off or separated because of the above-described moisture absorption or due to hygroscopicity.

It is therefore an object of the invention to provide a tire for an aircraft in which organic fibers, having an impregnating agent impregnated between or adhered to filaments, are used to form a protective layer, thereby ensuring moisture is not absorbed into the organic fibers, whereby, even if cuts progress to the protective layer, it is possible to prevent the protective layer from being separated.

According to the invention, there is provided a tire for an aircraft, comprising a protective layer which includes a plurality of cords formed by adhesion of cord filaments of organic fibers to each other, and a rubber layer for coating the cords under such a condition that the plurality of cords are arranged in a side-by-side relation to each other, the protective layer being embedded into a tread section, characterized in that an impregnating agent is impregnated between or adhered to the cord filaments at the time of formation of the cords.

For this impregnating agent, an impregnating agent with a liquid rubber as the principle ingredient can be applied. Preceding the cord bonding agent process is an impregnating process using an impregnating agent with the principle ingredient of liquid state rubber having a number average molecular weight of 1000 to 60,000. For the liquid rubber, polybutadiene, polyisoprene, styrene-butadiene rubber, acrylonitrilebutadiene rubber or the like can be used. However, any material which does not prevent the bonding of the bonding agent or the constituent component of the rubber that contacts the cord can be used. Further, to improve the boding nature and combining nature of the liquid rubber and to improve the mechanical nature, it is desirable to have an active functional group such as an hydroxyl group, a carboxyl group, an epoxy group, an acrylonitrile group, an isocyanate group or the like at the end of, or inside the molecular chain of the liquid state rubber. Also with these active functional groups, it is possible to block so as not to show activity below a fixed temperature in order to prevent the increase in viscosity and lowering of the impregnating characteristics, when the cord is impregnated with the impregnating agent. However, in order to maintain adequate adhesive characteristics, it is preferable to have a high functional group concentration.

Further, it is necessary to have the number average molecular weight of the liquid rubber used in this invention less than 60,000 so as to increase the amount of adhesion of the polymer of the impregnating agent and further improve the adhesiveness of the impregnating agent between the filaments. If this molecular weight is above 60,000, then since the viscosity of the liquid rubber is lowered when the solvent is not used, even if the impregnating characteristics are improved by heating to a high temperature, adequate impregnation cannot be obtained. When the solvent is used, it is necessary to have a large amount of the solvent for the impregnating agent. However in this case the polymer amount of the liquid rubber that is attached to the filament decreases and sufficient lubrication effect between filaments cannot be obtained.

On the other hand, to ensure the fatigue resistance and adhesiveness, it is required to have a lower limit of the number average molecular weight above 1000.

So as to increase the amount of adhesion of the polymer of the liquid rubber during impregnation, it is desirable that solvent is not used, and the viscosity of the polymer of the liquid rubber is reduced by heating. However, for continuous production, an impregnating agent is prepared having a principle agent of liquid rubber diluted with an organic solvent. Subsequently it is once more desirable to carry out a normal bonding agent process or other equivalent processes.

In this way, with the agent diluted by an organic solvent, the polymer of the liquid rubber is sufficiently impregnated in between the filaments in the cord so that it is difficult to form a thick layer of the liquid rubber on the cord surface, and even with a high adhesion amount, it is possible to maintain the adhesive strength between the cord and the embedded rubber.

Further, it is desirable to have the amount of the polymer of the liquid rubber of the impregnating agent adhering to the cord within a range of 5% to 50% by weight. This is because, if the amount is less than 5% by weight, the lubrication effect is slight and sufficient improvement in fatigue resistance cannot be obtained, while if the amount is above 50% by weight, a thick layer of impregnation agent is formed on the cord surface and the adhesive strength between the cord and the embedded rubber is reduced. This adhesive amount can be measured from the cord weight change.

Next, in the heat treatment process, it is necessary to appropriately select the temperature and time period since the adhesion strength between the cord and the embedded rubber depends on the duration and temperature of the heat treatment.

Desirably this heat treatment should be performed at at least 120° C and for more than 5 mins, and more desirably at above 160° C and for more than 20 mins. In the case of a heat treatment temperature of 195° C, heat treatment for a period of approximately 10 mins is appropriate.

Desirably the heat treatment temperature is below 250° C furthermore this should be lower than 20° C above the melting point of the fiber cord. During the heat treatment, it is not necessary to give the cord tension. For example, holding the cord under a tension of above 0.1g/d to the extend of not being slack is satisfactory. As a result of the heat treatment, the impregnation agent and the cord are securely bonded, and by the bonding agent treatment, the bonding characteristics of the cord and rubber are also improved.

When aramid fiber, aromatic polyester fiber, polyvinylalcohol fiber with high ductility (Trade Mark: vinylon fiber) or the like with a modulus of elasticity of over 200 g/d is used in the manufacturing method for the fiber cord for the reinforcement of the rubber in the present invention, the results are conspicuous. Especially when an aramid fiber cord (such as Kevlar or Technora, Trade Mark of aramid fiber made by Dupont and Teijin respectively) is used, and is heat treated after the liquid rubber with an epoxy group inside the molecule is permeated, into the cord, the bond between the aramid fiber and the liquid rubber is further improved and the fatigue resistance of the fiber cord is remarkably improved, too.

Further, with the corresponding example of this invention, a cord which has been twisted with an upper twist or lower twist can be used to directly reinforce the rubber material after impregnating the cord with the above liquid rubber containing an impregnating agent as an essential element.

Next, an explanation of the method of impregnating the impregnating agent between the cord filaments will be given.

The first method of impregnating the cord is to leave the cord in the impregnating agent for a long period of time.

The second method involves soaking the cord in the impregnating agent under vacuum or under pressure or alternating vacuum and pressure to promote the impregnation.

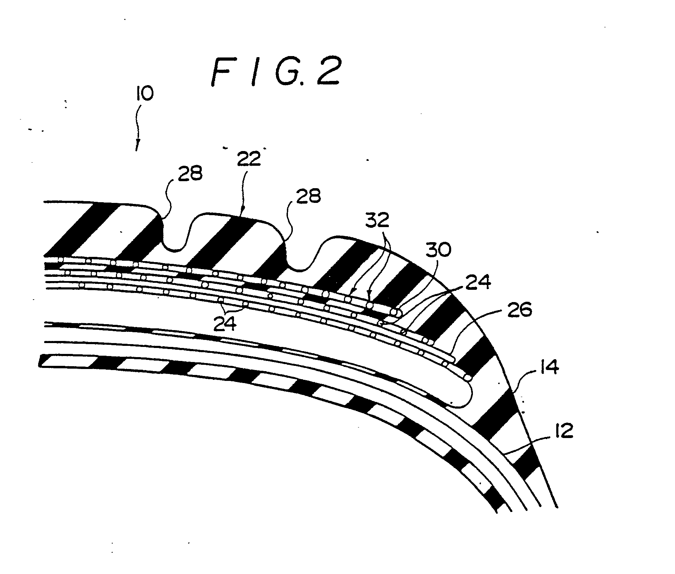

The third method involves using a plurality of squeeze rollers, provided in an impregnation tank containing impregnation agent as shown in Fig. 2, to squeeze the cord as it is passed through these

4

squeeze rollers. With this method the cord is compressed with the squeeze rollers to remove any air, and after passing through the squeeze rollers, the cord is loosened a little so as to absorb the impregnating agent. By repeating this process impregnation is promoted.

According to the invention, the impregnating agent is impregnated between or adhered to the cord filaments of the cords which are used to the protective layer embedded into the tread section. Thus, even if cuts occurring in the tread section progress into the protective layer and moisture following along the cuts reaches the protective layer, the impregnating agent can prevent the moisture from being absorbed into gaps between the cord filaments. Accordingly, the adhesive condition between the cord filaments is not reduced, thereby preventing the separation of the protective layer. Also with the lubrication effect between the filaments and fibers or yarns the cord is softened so that partial deformation is reduced and also heat generation becomes less.

Fig. 1 is a cross-sectional view of a tire for an aircraft, according to an embodiment of the invention, with hatching of a rubber layer being omitted;

Fig. 2 is an enlarged view of a tread section and its surrounding area;

Fig. 3 is an enlarged view of aramid cords which are used to form a protective layer according to the embodiment;

Fig. 4 is a sectional top plan view showing the protective layer with a coated rubber layer partially peeled away;

Fig. 5 is an enlarged view of conventional nylon cords which are used to form a protective layer; and

Fig. 6 is an enlarged view of aramid cords which are used to form the conventional protective layer.

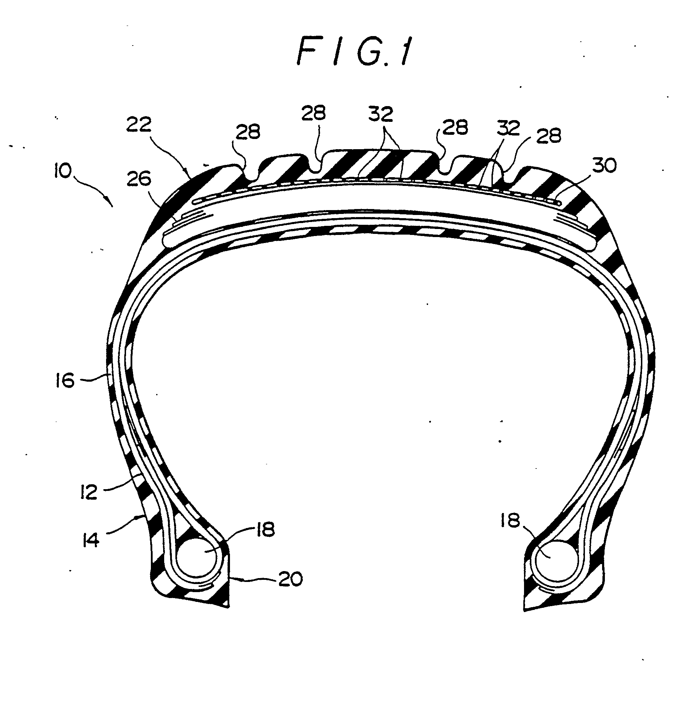

In Fig. 1, there is shown a tire 10 for an aircraft, according to an embodiment of the present invention. The tire 10 is arranged as a pressure vessel formed by a carcass 12 which maintains an internal pressure produced by air supplied to the interior of the tire 10. The carcass 12 has a horse shoe shaped cross section and is formed from a plurality of cords. The cords are made of industrial fibers or steel wires, and are arranged in side-by-side relation to each other. The cords are coated by a rubber layer. The industrial fibers may be nylon, polyester, aramid or the like. The cords used in the carcass 12 of the tire 10 applied to the present embodiment extend axially in the widthwise direction of the tire 10 and are arranged in side-by-side relation to each other in a circumferential direction of the tire 10, so that the tire 10 has a radial construction.

The surface of the carcass 12 is coated with a rubber layer 14. The rubber layer 14 serves as a protection for the outer sides of the side walls 16 of tire 10 illustrated in Fig. 1 and the outer sides of both side walls of the carcass 12.

Both edge portions of the carcass 12 are retained by wrapping the cords around a pair of beads 18 each of which is formed as a ring-like configuration about a rotational axis of the tire 10. The pair of beads 18 are also coated with the rubber layer 14, so as to form a composite bead section 20 . The bead section 20 determines a dimension of the inner periphery of the tire 10, and ensures the fit between a rim (not shown) and the bead section 20.

The rubber layer 14 has its upper portion as viewed in Fig. 1, connected to a tread section 22. The tread section 22 is the portion which actually contacts with the ground. The tread section 22 is formed with a large wall thickness so as to sufficiently withstand wear and external damage. A plurality of belts 26 or breakers are arranged between the carcass 12 and the tread section 22. The belts 26 are arranged with adjacent belts crossing each other. Each of the belts 26 is formed by coating a plurality of cords 24 (refer to Fig. 2) with a rubber layer. The cords 24 are arranged in side-by-side relation to each other in a direction close to the circumferential direction of the tire 10( normally, the angle of the belt is within $\pm16^{\circ}$ with respect to the equatorial plane). By the belts 26, rigidity of the tire 10 is maintained.

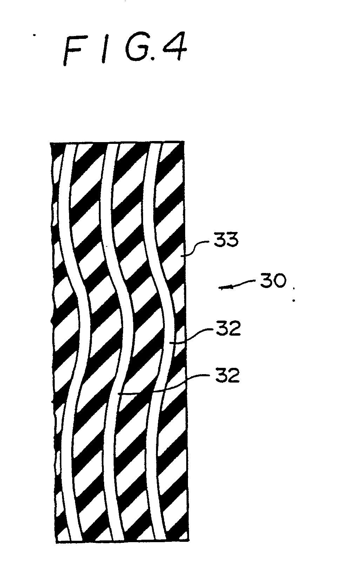

Referring again to Fig. 2, the tread section 22 has a contact surface which is in contact with the ground. The contact surface of the tread section 22 is formed with a plurality of grooves 28. The grooves 28 are not only a tread design requirement factor, but also serve to release heat generated in the tire 10. A protective layer 30 is embedded between the bottoms of the respective grooves 28 and the uppermost layer of the belts 26. As shown in Fig. 4, the protective layer 30 has a plurality of corrugated industrial fiber cords (aramid cords 32 in the present embodiment) which are arranged in side-by-side relation to each other in the widthwise direction of the tire 10. The aramid cords 32 are coated with a thin rubber layer 33. The protective layer 30 protects the belts 26 so that progress of cuts is not transmitted to the belts 26 from the surface of the tread section 22 which is damaged due to contact with the ground.

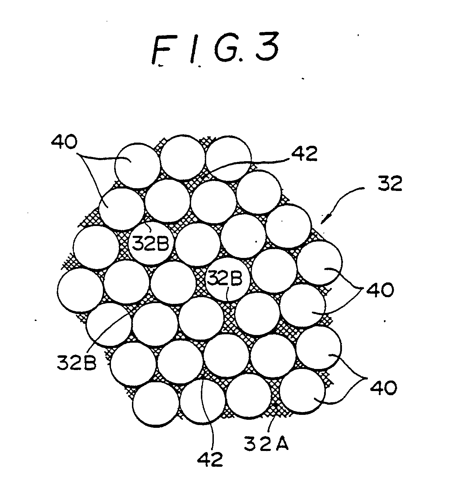

Here, as shown in Fig. 3, each of the aramid cords 32 is formed as a bundle of a plurality of aramid fibers 40. Adhesive is applied to the bundle of the aramid fibers 40 from the outside to form a single cord. In the case of the aramid fibers 40 in the present embodiment, because of the nature of aramid fiber, the adhesive applied to the aramid fibers 40 from the outside penetrates only to the layer 32A closest to the surface, does not penetrate into gaps 32B between the aramid fibers 40. Thus, in the present embodiment, an impregnating agent 42 is poured between the bundled aramid fibers 40 before application of the adhesive. As a result, a single aramid cord 32 is formed without cavity portions occurring between the aramid fibers 40. In this connection, liquid polybutadiene rubber (Trade Mark: R45-EP1, manufactured by IDEMITSU SEKIYU KAGAKU Co., Ltd.), which has epoxy equivalent of 200 and a number average molecular weight of 2800, can be used as the impregnating agent 42.

The operation of the embodiment will be described below.

While an aircraft is running on a runaway or a guide way, the tread section 22 is damaged and the surface is cut. If the tire continues to run with that the surface of the tire 10 cut, the cuts progresses towards the center of the tire 10. In the case of the surface of the tread section 22, where the wall-thickness dimension is sufficiently ensured, the progress of the cuts is kept to a minimum. However when cuts are generated at the bottoms of the grooves 28 in the tread section 22, the cuts progress to the protective layer 30, if the distance between the bottoms of the grooves 28 and the protective layer 30 is not sufficient. Accompanying with the progress of the cuts, moisture from the runway or the guide way reaches the protective layer 30.

In the present embodiment, liquid polybutadiene rubber (Trade Name: R45-EPI, manufactured by IDEMITSU SEKIYU KAGAKU Co,. Ltd.), which has an epoxy equivalent of 200 and an average molecular weight of 2800, is poured between the aramid fibers 40, when the aramid fibers 32 are formed into the protective layer 30. Accordingly, moisture is not hygroscopically absorbed into the gaps between the aramid fibers 40, and is kept outside of the aramid fibers 40.

Thus, the moisture is not hygroscopically absorbed an further into the tire 10 and even if the tire 10 is under high temperature, the adhesiveness of the aramid fibers 40 is not deteriorated. Consequently separation of the protective layer 30 can be prevented.

In the present embodiment, the cords applied to the protective layer 30 are the aramid cords 32. However in the present invention it is also possible to use cord of carbon fibers, acrylic fibers or the like.

Further, in the embodiment, the tire 10 has a radial construction. However, the invention is also applicable to tires having a bias construction.

Test:

The aramid fiber cord (3000 d/3, 20x20 twists/10cm) which uses an aramid fiber (product of Teijin with a Trade Mark Technora).

This was impregnated at room temperature for about 30 seconds in an impregnating agent of liquid polybutadiene rubber (product of Idemitsu Sekiyu Kagaku Co. Trade Mark: R45-EP1) dissolved in acetone as a solvent.

The impregnating conditions are as follows:

Test 1: The cord was impregnated with the impregnating agent after twisting, and then RFL treatment was performed.

Test 2: The cord was impregnated before twisting and RFL treatment performed after twisting.

Comparative test:

The RFL treatment was performed without impregnating the cord.

The acetone was evaporated in the following drying process and again heat treatment at 160°C 40 mins was performed.

The specifications of the RFL bonding agent used in the tests are shown in the following Table 1.

Table 1

|  | Part of weight |
|---|---|
| soft water | 597 |
| Resorcin | 18.20 |
| formaldehyde (37% water solution) | 26.90 |
| caustic soda (10% water solution) | 6.60 |
| Vinylpyridine rubber (40% latex) | 351.3 |

Treatment involved 3 kinds of cord bonded with the above bonding agent and embedded in rubber in a plane corrugated form.

Respective tires of size H46 x 18R20 28PR were manufactured with a protective layer made according to this treatment and drum tests were performed.

The test conditions for this were a normal weight of 53040 Lbs, a standard tire pressure of 200 psi, and a running speed of 40 mph. The tires were run for a period of 10 minutes then cooled for 1 hour and the test repeated.

Water was absorbed into cuts in the tread as far as the protective layer of the tire tread during each cycle, and the tire was run until separation occurred between the tread and the protective layer. Test results are shown in table 2 below.

Table 2

|  | test 1 | test 2 | comparative test |
|---|---|---|---|
| Life to separation (index number) | 310 | 300 | 100 |

The tire for an aircraft, according to the invention, as described above, has the following advantages. That is, the protective layer can be made of cord filaments wherein the impregnating agent is impregnated between or adhered to the organic fibers and in either case, moisture can be prevented from being hygroscopically absorbed between the organic fibers. Further, even if cuts progress to the protective layer, it is possible to prevent the protective layer from being separated.

**Claims**

1. An aircraft pneumatic tire (10) in which a plurality of belts or breakers (26) is provided on the outside of a carcass (12) whose both edges are provided respectively at a pair of bead sections (18), and in which a protective layer (30) is provided on the outside of said belts or said breakers, said protective layer having a plurality of cords (32) disposed in parallel relation to each other, characterized in that each of said cords comprises a plurality of bundled filaments (40) and is coated with a thin rubber layer (33), and in that an impregnating agent (42) is impregnated between the filaments to fill any spaces between said filaments, thereby preventing water from reaching said filaments through cuts resulting from intrusion of foreign matter from the tire tread.

2. A pneumatic tire as claimed in claim 1, characterized in that said cords are formed into a wavy configuration in their longitudinal direction and said filaments forming each of said cords are aramid fibers.

3. A pneumatic tire as claimed in claim 1 or 2, characterized in that said impregnating agent is liquid rubber.

7

# F I G. 1

# F I G. 2

# F I G. 3

# F I G.4

PRIOR ART
*FIG. 5*

PRIOR ART
*FIG.6*